# EUROPEAN PATENT APPLICATION

(11) **EP 4 579 454 A1**
(43) Date of publication of application: **02.07.2025**
(21) Application number: 23870276.5
(22) Date of filing: 11.09.2023
(51) Int. Cl.: G06F 9/48, G06F 9/451

(54) **SERVICE CALLING METHOD AND SYSTEM, AND ELECTRONIC DEVICE**

(30) Priority: 30.09.2022 CN 202211217534
(71) Applicant: Huawei Technologies Co., Ltd., Shenzhen, Guangdong 518129 (CN)
(72) Inventor: BIAN, Chao, Shenzhen, Guangdong 518129 (CN)
(74) Representative: Körber, Martin Hans
(86) International application number: PCT/CN2023/117971
(87) International publication number: WO 2024/067037

(57) **Abstract**

In technical solutions of a service invoking method and system, and an electronic device that are provided in embodiments of this application, a first electronic device sends an invoking request of a target service to a second electronic device in response to a first operation that a user invokes the target service in a first application, where the invoking request indicates the second electronic device to use a second application to provide the target service; in response to a second operation performed by the user on the second application in the first electronic device or the second electronic device, automatically receives first information that is generated by the second application and that is sent by the second electronic device; and displays second information in the first application based on the first information, where the second information is the same as or different from the first information. A cross-device target service is provided, so that an electronic device having no target function or having a weak target function may initiate an invoking request of the target service in any application, select a target service interface for connecting to a peripheral device, and provide the user with imperceptible target service experience by using a target function of a peer device.

## Description

This application claims priority to Chinese Patent Application No. 202211217534.0, filed with the China National Intellectual Property Administration on September 30, 2022 and entitled "SERVICE INVOKING METHOD AND SYSTEM, AND ELECTRONIC DEVICE", which is incorporated herein by reference in its entirety.

### TECHNICAL FIELD

This application relates to the field of computer technologies, and in particular, to a service invoking method and system, and an electronic device.

### BACKGROUND

Currently, some electronic devices do not have a target function or have a weak capability of the target function. As a result, an electronic device of this type cannot provide a target service corresponding to the target function for a user. For example, some electronic devices without a camera or electronic devices with a camera but with a low battery level cannot provide a camera service for users.

### SUMMARY

In view of this, embodiments of the present invention provide a service invoking method and system, and an electronic device, to provide a cross-device target service, so that an electronic device having no target function or having a weak target function may initiate an invoking request of the target service in any application, select a target service interface for connecting to a peripheral device, and provide a user with imperceptible target service experience by using a target function of a peer device.

According to a first aspect, an embodiment of the present invention provides a service invoking method, applied to a first electronic device. The first electronic device includes a first application, and the method includes:
sending an invoking request of a target service to a second electronic device in response to a first operation that a user invokes the target service in the first application, where the invoking request indicates the second electronic device to use a second application to provide the target service, and the second application is installed on the second electronic device;
in response to a second operation performed by the user on the second application in the first electronic device or the second electronic device, automatically receiving first information that is generated by the second application and that is sent by the second electronic device; and
displaying second information in the first application based on the first information, where the second information is the same as or different from the first information. **In** this embodiment of the present invention, a cross-device target service is provided, so that an electronic device having no target function or having a weak target function may initiate an invoking request of the target service in any application, select a target service interface for connecting to a peripheral device, and provide a user with imperceptible target service experience by using a target function of a peer device.

With reference to the first aspect, in some implementations of the first aspect, the second information is different from the first information, and the method further includes:
generating the second information through conversion based on the first information. In this embodiment of the present invention, when the first information is different from the second information, the second information is generated by the first electronic device through conversion based on the first information. For example, the first electronic device is an electronic ink screen reader, the second electronic device is a smartphone, the target service is a photographing service, the first information is a color image, and the second information is a black-and-white image or a grayscale image corresponding to the first information, so that the first information is different from the second information.

With reference to the first aspect, in some implementations of the first aspect, the sending an invoking request of a target service to a second electronic device in response to a first operation that a user invokes the target service in the first application includes:
displaying a first control on an interface of the first application, where the first control is used to display an option of at least one service;
in response to an operation that the user selects a target service option from the option of the at least one service in the first control, displaying a second control corresponding to the target service, where the second control is used to display an option of at least one electronic device providing the target service; and
sending, by the first electronic device, the invoking request to the second electronic device in response to an operation that the user selects a second electronic device option from the option of the at least one electronic device providing the target service in the second control. **In** this embodiment of the present invention, the first electronic device may initiate invoking of the target service of the second electronic device in any application by using an operation control.

With reference to the first aspect, in some implementations of the first aspect, before the displaying a second control corresponding to the target service, the method further includes:
obtaining, based on the target service, the at least one electronic device providing the target service. In this embodiment of the present invention, the second control is used to display the option of the at least one electronic device providing the target service. Therefore, before displaying the first control, the first electronic device needs to first obtain a peripheral electronic device providing the target service.

With reference to the first aspect, in some implementations of the first aspect, that the second control is used to display an option of at least one electronic device providing the target service includes:
arranging and displaying, in the second control according to a preset priority rule, the at least one electronic device providing the target service. In this embodiment of the present invention, the at least one electronic device providing the target service is sorted according to the preset priority rule, and the user performs selection based on the electronic device recommended in the second control, so as to better experience the function.

With reference to the first aspect, in some implementations of the first aspect, the sending an invoking request of a target service to a second electronic device, where the invoking request indicates the second electronic device to use a second application to provide the target service includes:
if the second application is occupied, waiting for the second application to be idle, or preempting the second application. In this embodiment of the present invention, a conflict management solution is provided in a target service invoking process, so that the user can better experience the function.

With reference to the first aspect, in some implementations of the first aspect, the method further includes:
if the target service fails to be invoked, displaying a prompt of a failure cause, or re-sending the invoking request of the target service to the second electronic device. In this embodiment of the present invention, an invoking failure management solution is provided in a target service invoking process, so that the user can better experience the function.

With reference to the first aspect, in some implementations of the first aspect, a service type includes an interface, a window, an interface, or a system.

With reference to the first aspect, in some implementations of the first aspect, service types can be adaptively converted to each other.

It is known that a service usually means a process running at a bottom layer of a system and is invisible. However, in embodiments of the present invention, the service is an adaptive and changeable state capability and is visible. The service types in this embodiment of the present invention include [Interface] (corresponding to a card/icon), [Window] (corresponding to a preview/thumbnail), [Interface] (corresponding to an API capability), and [System] (corresponding to a framework capability), and can be converted between each other.

With reference to the first aspect, in some implementations of the first aspect, the responding to a second operation performed by the user on the second application in the first electronic device includes:
opening a target service window on the interface of the first application, where the target service window is used to display an interface of the second application; and
sending a control instruction to the second electronic device in response to an operation performed by the user on the target service window. In this embodiment of the present invention, in a scenario in which the user directly operates the first electronic device and the second electronic device, after the first electronic device sends the invoking request to the second electronic device, the user directly operates the second electronic device, so that the second application generates the first information. However, in a scenario in which the user can directly operate the first electronic device but cannot directly operate the second electronic device, a display area of the target service window needs to be established on the interface of the first application in the first electronic device, a stream callback function is used to synchronize a display and processing interface of the second electronic device to the target service window of the first electronic device, and the user remotely controls the second electronic device by using the target service window, so that the second application generates the first information, so as to perform better guidance and operation.

With reference to the first aspect, in some implementations of the first aspect, after the displaying second information in the first application based on the first information, the method further includes:
automatically closing the target service window. The first electronic device has completed invoking of the target service, so that the target service window can be automatically closed.

With reference to the first aspect, in some implementations of the first aspect, before the opening a target service window on the interface of the first application, the method further includes:
displaying a third control on the interface of the first application.

The opening a target service window on the interface of the first application includes:
opening the target service window on the interface of the first application in response to an operation performed by the user on the third control. In an optional solution, the user may open the target service window as required by operating the third control. Therefore, in any scenario, as long as the user wants to open the target service window, the user can open the target service window at any time.

With reference to the first aspect, in some implementations of the first aspect, before the opening a target service window on the interface of the first application, the method further includes:
obtaining a distance between the first electronic device and the second electronic device; and
if the distance between the first electronic device and the second electronic device is greater than or equal to a first threshold, opening the target service window on the interface of the first application; or
if the distance between the first electronic device and the second electronic device is less than the first threshold, skipping opening the target service window on the interface of the first application. In another optional solution, when the distance between the first electronic device and the second electronic device is long enough, the first electronic device considers by default that the user cannot directly operate the second electronic device, and therefore opens the target service window on the interface of the first application; or when the distance between the first electronic device and the second electronic device is short, the first electronic device considers by default that the user can directly operate the second electronic device, and therefore does not open the target service window on the interface of the first application.

With reference to the first aspect, in some implementations of the first aspect, before the automatically receiving first information that is generated by the second application and that is sent by the second electronic device, the method further includes:
after the second electronic device generates the first information, sending a storage instruction to the second electronic device, where the storage instruction indicates that a storage location of the first information includes the first electronic device; and
receiving the first information sent by the second electronic device. In an optional solution, after generating the first information, the second electronic device notifies the first electronic device, and only after receiving the storage instruction sent by the first electronic device, the second electronic device sends the first information to the first electronic device, without any user operation. The entire process brings imperceptible experience to the user.

With reference to the first aspect, in some implementations of the first aspect, after the automatically receiving first information that is generated by the second application and that is sent by the second electronic device, the method further includes:
locally storing the first information based on a storage structure of the first electronic device. For example, the first electronic device is an electronic ink screen reader, the second electronic device is a smartphone, the target service is a photographing service, and the first information is a picture. Because the electronic ink screen reader does not have a default storage location for storing a picture, the electronic ink screen reader needs to store a picture based on a storage structure of the electronic ink screen reader.

With reference to the first aspect, in some implementations of the first aspect, the target service is a camera service.

With reference to the first aspect, in some implementations of the first aspect, the first information is a color image, the first electronic device is an electronic ink screen reader, and the second information is a grayscale image corresponding to the color image. In this embodiment of the present invention, when the first information is different from the second information, the second information is generated by the first electronic device through conversion based on the first information. For example, the first electronic device is an electronic ink screen reader, the second electronic device is a smartphone, the target service is a photographing service, the first information is a color image, and the second information is a black-and-white image or a grayscale image corresponding to the first information, so that the first information is different from the second information.

With reference to the first aspect, in some implementations of the first aspect, the preset priority rule includes that an electronic device that provides the target service and that has a same account as the first electronic device has a higher priority. In this embodiment of the present invention, the electronic device that provides the target service and that has the same account as the first electronic device is preferentially recommended to the user.

With reference to the first aspect, in some implementations of the first aspect, the preset priority rule includes that an electronic device that provides the target service and that is in an active state has a higher priority. In this embodiment of the present invention, the electronic device that provides the target service and that is in the active state is preferentially recommended to the user.

With reference to the first aspect, in some implementations of the first aspect, the preset priority rule includes that an electronic device that provides the target service and that has a stronger target service capability has a higher priority. In this embodiment of the present invention, an electronic device that provides the target service and that has a strong target service capability is preferentially recommended to the user.

With reference to the first aspect, in some implementations of the first aspect, the preset priority rule includes that an electronic device that provides the target service and that has a higher battery level and a better hardware device status has a higher priority. In this embodiment of the present invention, an electronic device that provides the target service and that has a high battery level and a good hardware device status is preferentially recommended to the user.

According to a second aspect, an embodiment of the present invention provides a service invoking method, applied to a second electronic device. The second electronic device includes a second application, and the method includes:
starting the second application based on an invoking request that is of a target service and that is sent by a first electronic device, where the second application provides the target service;
generating first information by using the second application; and
sending the first information to the first electronic device, where the first electronic device includes a first application, and the first application is different from the second application, so that the first electronic device displays second information on an interface of the first application based on the first information, where the second information is the same as or different from the first information. In this embodiment of the present invention, a cross-device target service is provided, so that an electronic device having no target function or having a weak target function may initiate an invoking request of the target service in any application, select a target service interface for connecting to a peripheral device, and provide a user with imperceptible target service experience by using a target function of a peer device.

With reference to the second aspect, in some implementations of the second aspect, the generating first information by using the second application includes:
displaying an interface of the second application; and
generating the first information in response to an operation of the user. In this embodiment of the present invention, in a scenario in which the user directly operates the first electronic device and the second electronic device, after the first electronic device sends the invoking request to the second electronic device, the user directly operates the second electronic device, so that the second application generates the first information.

With reference to the second aspect, in some implementations of the second aspect, the generating first information by using the second application includes:
displaying an interface of the second application;
sending interface information of the second application to the first electronic device, so that the first electronic device displays an interface of the second electronic device in a target service window of the interface of the first application based on the interface information;
receiving a control instruction sent by the first electronic device; and
performing, based on the control instruction, a control operation corresponding to the control instruction, where the control operation includes generating the first information. In this embodiment of the present invention, in a scenario in which the user can directly operate the first electronic device but cannot directly operate the second electronic device, a display area of the target service window needs to be established on the interface of the first application in the first electronic device, a stream callback function is used to synchronize a display and processing interface of the second electronic device to the target service window of the first electronic device, and the user remotely controls the second electronic device by using the target service window, so that the second application generates the first information, so as to perform better guidance and operation.

With reference to the second aspect, in some implementations of the second aspect, after the generating first information by using the second application, the method further includes:
displaying a fourth control, where the fourth control is used to display a storage location option for storing the first information, and the storage location option includes a second electronic device option; and
locally storing the first information in response to an operation that the user selects the second electronic device option from the storage location option in the fourth control. In an optional solution, after generating the first information, the second electronic device stores the first information in local storage space of the second electronic device based on user selection.

With reference to the second aspect, in some implementations of the second aspect, after the generating first information by using the second application, the method further includes:
displaying a fourth control, where the fourth control is used to display a storage location option for storing the first information, and the storage location option includes a first electronic device option; and
in response to an operation that the user selects the first electronic device option from the storage location option in the fourth control, instructing the first electronic device to store the first information. In this embodiment of the present invention, in a scenario in which the user directly operates the first electronic device and the second electronic device, after the second electronic device generates the first information, the second electronic device displays the fourth control used to display the storage location option for storing the first information, and the user operates the fourth control to select to store the first information in the first electronic device.

With reference to the second aspect, in some implementations of the second aspect, before the sending the first information to the first electronic device, the method further includes:
receiving a storage instruction sent by the first electronic device, where the storage instruction indicates that a storage location of the first information includes the first electronic device; and
sending the first information to the first electronic device based on the storage instruction. In this embodiment of the present invention, in a scenario in which the user can directly operate the first electronic device but cannot directly operate the second electronic device, after the second electronic device generates the first information, the second electronic device displays the fourth control used to display the storage location option for storing the first information, and the user remotely operates the fourth control in the target service window, to select to store the first information in the first electronic device.

With reference to the second aspect, in some implementations of the second aspect, the target service is a camera service.

With reference to the second aspect, in some implementations of the second aspect, the first information is a color image, the first electronic device is an electronic ink screen reader, and the second information is a grayscale image corresponding to the color image.

According to a third aspect, an embodiment of the present invention provides a service invoking system, and the system includes the first electronic device in the foregoing method and the second electronic device in the foregoing method.

According to a fourth aspect, an embodiment of the present invention provides an electronic device, including a processor and a memory. The memory is configured to store a computer program, the computer program includes program instructions, and when the processor runs the program instructions, the electronic device is enabled to perform the steps of the foregoing methods.

According to a fifth aspect, an embodiment of the present invention provides a computer-readable storage medium. The computer-readable storage medium stores a computer program, the computer program includes program instructions, and when the program requests to be run by a computer, the computer is enabled to perform the foregoing methods.

According to a sixth aspect, an embodiment of the present invention provides a computer program product. The computer program product includes instructions, and when the computer program product runs on a computer or any at least one processor, the computer is enabled to perform the functions/steps in the foregoing methods.

In the technical solutions of the service invoking method and system, and the electronic device that are provided in embodiments of the present invention, the first electronic device includes the first application; the first electronic device sends the invoking request of the target service to the second electronic device in response to the first operation that the user invokes the target service in the first application, where the invoking request indicates the second electronic device to use the second application to provide the target service, and the second application is installed on the second electronic device; in response to the second operation performed by the user on the second application in the first electronic device or the second electronic device, the first electronic device automatically receives the first information that is generated by the second application and that is sent by the second electronic device; and the first electronic device displays the second information in the first application based on the first information, where the second information is the same as or different from the first information. In this embodiment of the present invention, a cross-device target service is provided, so that an electronic device having no target function or having a weak target function may initiate an invoking request of the target service in any application, select a target service interface for connecting to a peripheral device, and provide a user with imperceptible target service experience by using a target function of a peer device.

### BRIEF DESCRIPTION OF DRAWINGS

FIG. 1 is a diagram of a structure of an electronic device according to an embodiment of the present invention;
FIG. 2 is a block diagram of a software structure of an electronic device 100 according to an embodiment of the present invention;
FIG. 3 is a diagram of an architecture of a service invoking system according to an embodiment of the present invention;
FIG. 4 is a diagram of a service type according to an embodiment of the present invention;
FIG. 5 is a diagram of conversion between different service types according to an embodiment of the present invention;
FIG. 6 is a diagram of specific descriptions of three manners of implementing a service invoking capability or function according to an embodiment of the present invention;
FIG. 7 is a diagram in which a first electronic device invokes a target service in a first application according to an embodiment of the present invention;
FIG. 8 is another diagram in which a first electronic device invokes a target service in a first application according to an embodiment of the present invention;
FIG. 9 is another diagram in which a first electronic device invokes a target service in a first application according to an embodiment of the present invention;
FIG. 10 is a diagram of a device discovery indicator according to an embodiment of the present invention;
FIG. 11 is a diagram of interaction between a first electronic device and a second electronic device according to an embodiment of the present invention;
FIG. 12 is a diagram of service invoking processing of a second electronic device according to an embodiment of the present invention;
FIG. 13 is a diagram of a target service invoking process according to an embodiment of the present invention;
FIG. 14 is another diagram of a target service invoking process according to an embodiment of the present invention;
FIG. 15 is a flowchart of a service invoking method according to an embodiment of the present invention;
FIG. 16 is a flowchart of another service invoking method according to an embodiment of the present invention;
FIG. 17 is a specific flowchart of generating first information by a second electronic device by using a second application in FIG. 16;
FIG. 18 is another specific flowchart of generating first information by a second electronic device by using a second application in FIG. 16;
FIG. 19 is a diagram of a structure of a first electronic device according to an embodiment of the present invention; and
FIG. 20 is a diagram of a structure of a second electronic device according to an embodiment of the present invention.

### DESCRIPTION OF EMBODIMENTS

To better understand the technical solutions in the present invention, the following describes embodiments of the present invention in detail with reference to the accompanying drawings.

It should be clear that the described embodiments are merely some but not all of embodiments of the present invention. All other embodiments obtained by a person of ordinary skill in the art based on embodiments of the present invention without creative efforts shall fall within the protection scope of the present invention.

Terms used in embodiments of the present invention are merely for the purpose of illustrating specific embodiments, and are not intended to limit the present invention. Terms "a", "the foregoing", and "the" of singular forms used in embodiments and the appended claims of the present invention are also intended to include plural forms, unless otherwise specified in the context clearly.

It should be understood that a term "and/or" used in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

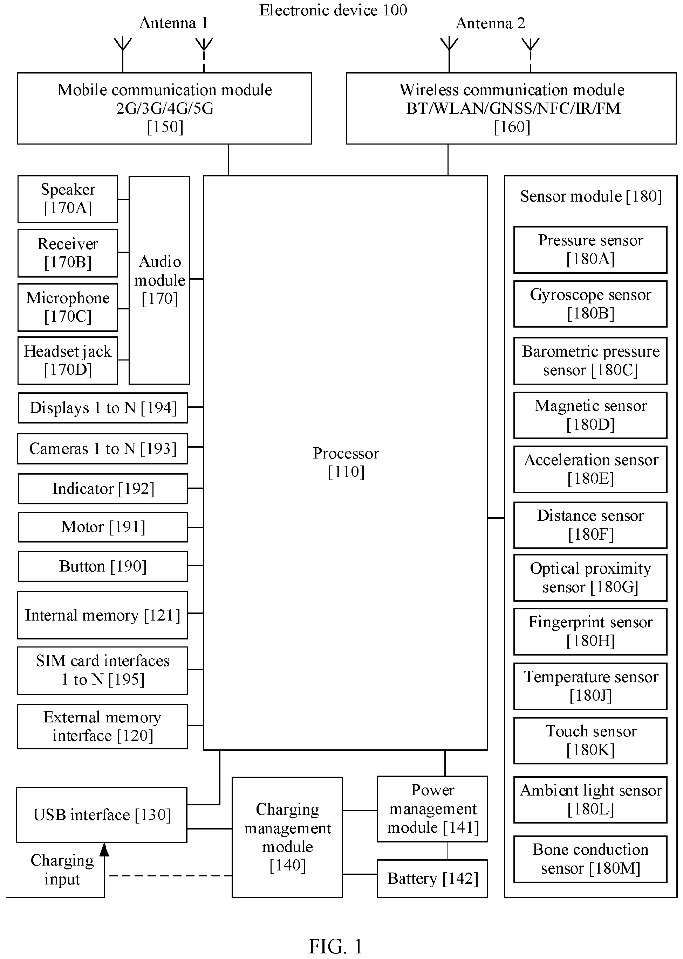

FIG. 1 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or use different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a c-all through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the electronic device 100, or may be configured to perform data transmission between the electronic device 100 and a peripheral device, or may be configured to connect to a headset to play an audio by using the headset, or may be configured to connect to another electronic device such as an AR device.

It may be understood that an interface connection relationship between the modules shown in this embodiment of the present invention is merely used as an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, or the like.

The ISP is configured to process data fed back by the camera 193. For example, during shooting, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An object is projected onto a photosensitive element by generating an optical image through a lens. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, for example, image recognition, facial recognition, speech recognition, and text understanding.

The external memory interface 120 may be configured to connect to an external storage card, for example, a micro SD card, to expand a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The speaker 170A, also referred to as a "horn", is configured to convert an audio electrical signal into a sound signal. The electronic device 100 may listen to music or listen to a hands-free call through the speaker 170A.

The receiver 170B, also referred to as an "earpiece", is configured to convert an audio electrical signal into a sound signal. When the electronic device 100 answers a call or voice information, the receiver 170B may be placed close to the human ear to answer the voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates having electrically conductive materials. When a force is applied to the pressure sensor 180A, a capacitance between electrodes changes. The electronic device 100 determines a pressure strength based on the change of the capacitance. When a touch operation is performed on the display 194, the electronic device 100 detects intensity of the touch operation based on the pressure sensor 180A. The electronic device 100 may also compute a touch location based on a signal detected by the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, computes, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic gaming scenario.

The barometric pressure sensor 180C is configured to measure barometric pressure. In some embodiments, the electronic device 100 computes an altitude through the barometric pressure measured by the barometric pressure sensor 180C, to assist in locating and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light outwards through the light-emitting diode. The electronic device 100 uses the photodiode to detect infrared reflected light from a nearby object. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to the ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor, to determine a touch event type. The display 194 may provide a visual output related to the touch operation. In some other embodiments, the touch sensor 180K may alternatively be disposed on a surface of the electronic device 100, and a location of the touch sensor is different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to constitute a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, or the like. The button 190 may be a mechanical button or a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may alternatively be customized.

The indicator 192 may be an indicator light, may be configured to indicate a charging status and a battery level change, and may also be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. Types of the plurality of cards may be the same or may be different. The SIM card interface 195 is also compatible with different types of SIM cards. The SIM card interface 195 is also compatible with an external storage card. The electronic device 100 interacts with a network through the SIM card, to implement functions such as a call and data communication. In some embodiments, the electronic device 100 uses eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of the present invention, an Android system of a layered architecture is used as an example to describe a software structure of the electronic device 100.

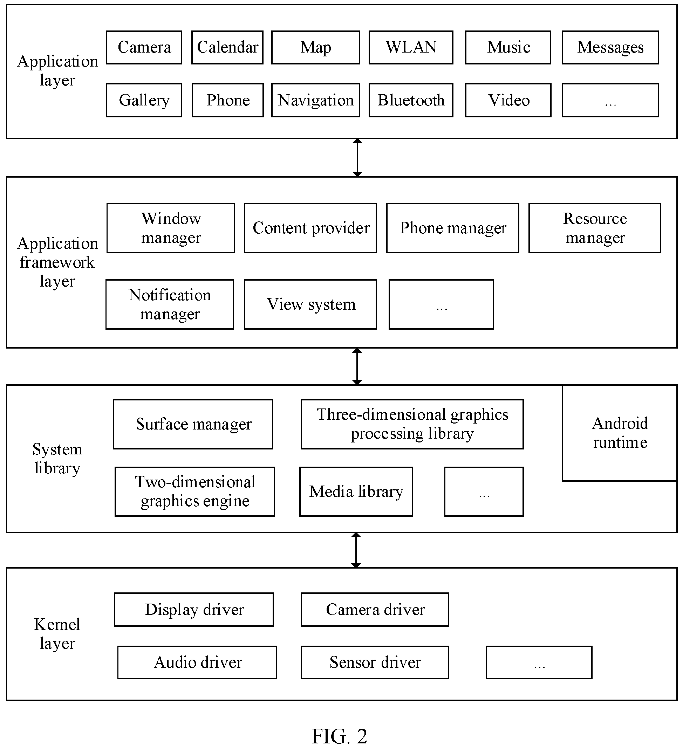

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering or declining).

The resource manager provides various resources such as a localized character string, an icon, an image, a layout file, and a video file for an application.

The notification manager enables an application to display notification information in a status bar, and may be configured to convey a notification type message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application running on the background, or may be a notification that appears on the screen in a form of a dialog window. For example, text information is prompted in the status bar, an alert sound is made, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to a shooting scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a single-tap operation, and a control corresponding to the single-tap operation is a control of a camera application icon is used. A camera application invokes an interface of the application framework layer to enable the camera application, then enables the camera driver by invoking the kernel layer, and captures a static image or a video through the camera 193.

Currently, some electronic devices do not have a specific function or have a weak capability of the specific function. As a result, an electronic device of this type cannot provide a service corresponding to the specific function for a user. For example, some electronic devices without a camera or electronic devices with a camera but with a low battery level, for example, electronic ink screen readers (for example, Kindle^{®}), cannot provide a camera service for users.

A current shooting manner is generally that a user opens a camera app in an electronic device, and taps a shooting icon, a control, or a button. Regardless of a shooting manner, the electronic device needs to support a camera function and have a camera shooting capability. However, some electronic devices without a camera cannot perform shooting and independently collect and produce media files. Therefore, currently, an electronic device mainly depends on a corresponding hardware device to provide a specific function service. If the hardware device is not provided or the hardware device is poor, a high-quality specific function service cannot be provided for a user.

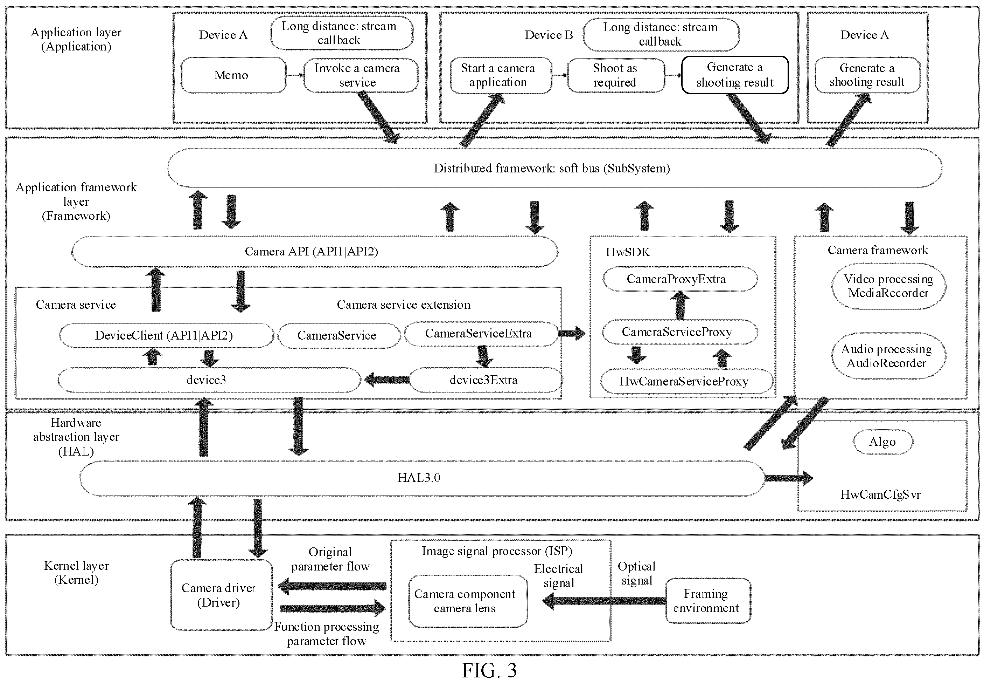

Based on the foregoing technical problem, an embodiment of the present invention provides a service invoking system. For ease of understanding, a camera service (including a photographing service and/or a video recording service) is used as an example. FIG. 3 is a diagram of an architecture of the service invoking system according to an embodiment of the present invention. The photographing service is a service for taking a picture, and the video recording service is a service for taking a video.

As shown in FIG. 3, the system includes a kernel layer, a hardware abstraction layer, an application framework layer, and an application layer that are involved in a service invoking process. Functions of all modules are as follows:
The kernel (Kernel) layer is a part related to hardware and a driver, and combines software and hardware capabilities and works with hardware to display functions. The camera service is used as an example. The kernel layer is mainly used by a camera driver to use a camera lens of a hardware device, and converts an optical signal in a framing into an electrical signal for subsequent image processing in the device.

The hardware abstraction layer (HAL) abstracts and encapsulates a hardware device. Different hardware vendors implement hardware control logic of the vendors based on the HAL standard. However, developers do not need to care about differences between hardware devices, and only need to access hardware based on standard interfaces provided by the HAL. The HAL layer helps the hardware vendors hide core details of device-related modules, and some core algorithms and the like may be implemented at the HAL layer. The camera service is used as an example. The HAL mainly processes a data stream of an electrical signal, to improve a shooting effect of a user.

The application framework (Framework) layer provides sub-capability services of basic systems, and various meta-capabilities such as activity (activity), window (window), and input (input) are provided at this layer. Definitely, a capability of the present invention is also an extension, and is also provided at this layer, for example, a camera framework layer including a video processing module and an audio processing module. As a meta-capability of a basic framework layer, capabilities can be provided for various applications. Because association between a plurality of devices is involved, interaction needs to be performed in a capability of a distributed framework, and a capability of a soft bus needs to be involved. A device interaction service or data is required through a channel of the soft bus. The camera service is used as an example. The application framework layer is mainly processing of a general framework of a camera and is used to improve scalability processing of the camera, and a shooting capability of the camera is further improved by extending the camera service and a camera capability.

The application layer mainly carries various applications, for example, Desktop, Settings, Gallery, and Camera. This involves interaction between different devices and data or service transfer between different devices. The camera service is used as an example. As shown in FIG. 3, the camera service is invoked in a memo of a first electronic device, the camera application is started in a second electronic device, shooting is completed in the second electronic device, a shooting result is generated in the first electronic device, and the like. For example, the first electronic device is an electronic ink screen reader, and the second electronic device is a mobile phone. When the shooting result is generated in the first electronic device, because the electronic ink screen reader can display only a black-and-white image and/or a grayscale image, the first electronic device needs to convert a color shooting result into a black-and-white image or a grayscale image for display.

As shown in FIG. 3, the service invoking system mainly implements service capability transfer between different devices by using the capability of the distributed framework. The camera service is used as an example. The first electronic device having no camera capability or having a weak camera capability starts the camera service on any application. Required shooting processing is performed on the second electronic device, and finally a shooting result is generated in the first electronic device in an imperceptible manner. If there is a specific distance between devices, a stream callback function may be used to see a shooting process on both devices and perform remote guidance, to obtain an optimal shooting result.

A plurality of devices interact with each other more by using a command. A command is converted into a specific operation instruction to perform a specific operation. However, in embodiments of the present invention, application servitization is more involved, which is a brand new capability abstraction. This service capability is a lightweight interaction manner, and may evolve and be used by a caller (that is, the first electronic device) based on different use manners.

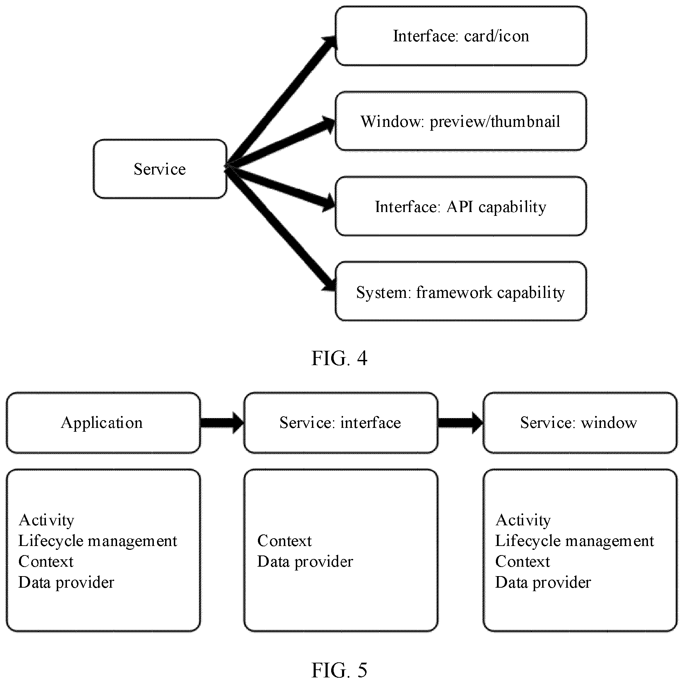

It is known that a service usually means a process running at a bottom layer of the system and is invisible. However, in embodiments of the present invention, the service is an adaptive and changeable state capability and is visible. FIG. 4 is a diagram of a service type according to an embodiment of the present invention. As shown in FIG. 4, service types in this embodiment of the present invention include [Interface] (corresponding to a card/icon), [Window] (corresponding to a preview/thumbnail), [Interface] (corresponding to an API capability), and [System] (corresponding to a framework capability), and can be converted between each other. Generally, the service type is set in a manner of [Type: Value].

In this embodiment of the present invention, all information of an application is stored in a service, and different values may be displayed based on different types. This is more lightweight. As shown in FIG. 5, for example, an application generally includes four parts: [Activity], [Lifecycle management], [Context], and [Data provider]. Especially, [Activity] further includes information such as an interface layout. The four parts are not isolated from each other, but depend on each other. If an [Interface] type service is selected, only [Context] and [Data provider] need to be retained. The type needs to be converted into a [Window] type service if needed, and content corresponding to [Activity] and [Lifecycle management] may be obtained based on existing information of [Context] and [Data provider].

According to the system architecture shown in FIG. 3, in this embodiment of the present invention, a local device having no camera capability or having a weak camera capability may have a camera capability. Some devices having no camera capability are generally used for reading and office work, for example, some tablet devices. Embodiments of the present invention relate to some high-frequency use scenarios of these devices, for example, class notes, office work, and conferences.

For example, a user uses a tablet to perform recording in a class, and a shooting capability of a camera of the tablet is weaker than that of a camera of a mobile phone. In addition, if the tablet is lifted in the class to perform shooting, a line of sight may be blocked. Therefore, the foregoing system architecture provided in this embodiment of the present invention may be used to invoke a camera service capability of the mobile phone to perform shooting.

For another example, some electronic ink screen readers (such as Kindle^{®}) have no camera hardware and cannot perform shooting. When taking a note, the foregoing system architecture provided in this embodiment of the present invention may also be used to invoke the camera service capability of the mobile phone to perform shooting.

In embodiments of the present invention, a new shooting solution is mainly implemented by abstracting a hardware capability and converting a distributed scenario. In the present invention, invoking and use of a remote device can be satisfied through servitization of a native hardware capability of the camera, and after shooting is completed, storage is directly performed in the local device. In the entire process, the user is unaware of dependency between devices. Shooting and file generation capabilities are directly implemented on a device having no camera capability or having a weak camera capability, thereby improving efficient user experience, and reducing some operation steps such as sharing or transmission performed by a remote device after shooting.

The foregoing invoking a camera service on different devices is a main application scenario, and another scenario having a similar cross-device invoking service is also applicable to the present invention. The service invoked in embodiments of the present invention is not limited to the camera service. For example, the service may further include a gallery service. In some examples, the electronic ink screen reader (for example, Kindle^{®}) does not have a gallery application, and the user cannot insert a picture when taking a note. In this case, the gallery application of the mobile phone may be invoked to provide a gallery service, and a picture in the gallery application of the mobile phone is directly inserted into the electronic ink screen reader.

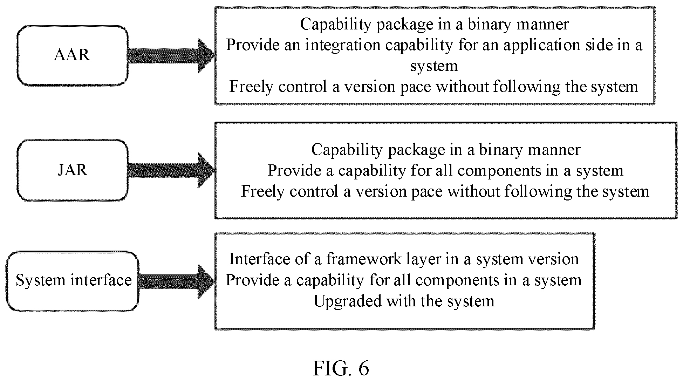

FIG. 6 is a diagram of specific descriptions of three manners of implementing a service invoking capability or function according to an embodiment of the present invention. As shown in FIG. 6, a relationship between an AAR format and a system of an electronic device is as follows: The AAR format is packaged in a binary manner, provides an integration capability for an application side in the system, and may freely control a version pace without following the system. A relationship between a JAR format and the system of the electronic device is as follows: The JAR format is packaged in a binary manner, provides a capability for all components in the system, and may freely control the version pace without following the system. A relationship between a system interface and the system of the electronic device is as follows: The system interface is an interface of a framework layer in a system version, provides a capability for all the components in the system, and is upgraded with the system. More specifically, an integrating manner may be an AAR manner and a JAR package manner, and an invoking manner may be a system interface manner. In other words, various functions described in the present invention may be implemented by using an AAR format file, a JAR format file, and/or a system interface of the electronic device.

In embodiments of the present invention, a service invoking system includes a first electronic device and a second electronic device. The first electronic device serves as a service invoking initiator device and serves as a requester, and mainly selects a corresponding initiation scenario based on a request of a user. The second electronic device serves as a service invoking processing device. The first electronic device includes a first application, and the first application includes a local application or a third-party application of the first electronic device, for example, Desktop, Settings, Gallery, or Camera. The first electronic device displays a first control on an interface of the first application, where the first control is used to display an option of at least one service, so that the user selects a target service option from the option of the at least one service. In response to an operation that the user selects the target service option from the option of the at least one service in the first control, the first electronic device displays a second control corresponding to a target service, where the second control is used to display an option of at least one electronic device providing the target service, so that the user selects a second electronic device option from the option of the at least one electronic device. These electronic devices displayed in the second control are all peer devices that can successfully establish a link to the first electronic device. The user may select any one of the electronic devices for processing, which cannot be processed on an original device.

A scenario in which the first electronic device initiates service invoking may be any service or application, provided that a camera shooting function needs to be used in the scenario. If a capability other than camera shooting is required, another service may also be invoked. For example, the user needs to insert a photo of a photographed object when using a memo for recording.

In embodiments of the present invention, a concept of "service" is used for processing a specific application in a lightweight manner. All application capabilities are also extended to other devices through services. According to a camera service used in embodiments of the present invention, a peripheral device that can provide a camera shooting function is found by using this tag.

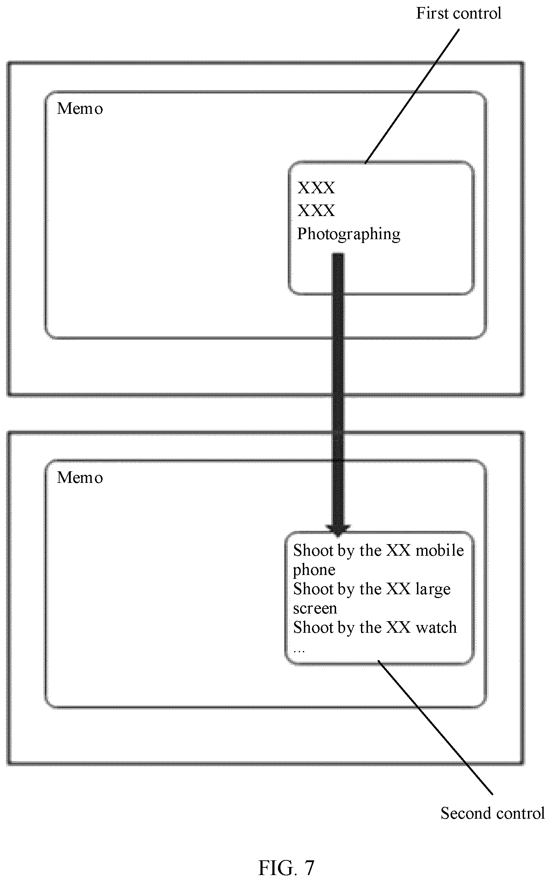

In a scenario, the first electronic device does not have a hardware device corresponding to the target service, and cannot provide the target service. For example, the first electronic device is an electronic ink screen reader, the first application is a memo, and the target service is a shooting service. FIG. 7 is a diagram in which the first electronic device invokes the target service in the first application according to an embodiment of the present invention. As shown in FIG. 7, a first control is displayed on the interface of the first application, where the first control displays an option of at least one service, including the "shooting service". In response to an operation that the user taps the "shooting service" in the first control, the first electronic device displays a second control corresponding to the shooting service, where the second control displays "Shoot by the XX mobile phone", "Shoot by the XX large screen", "Shoot by the XX watch", and the like.

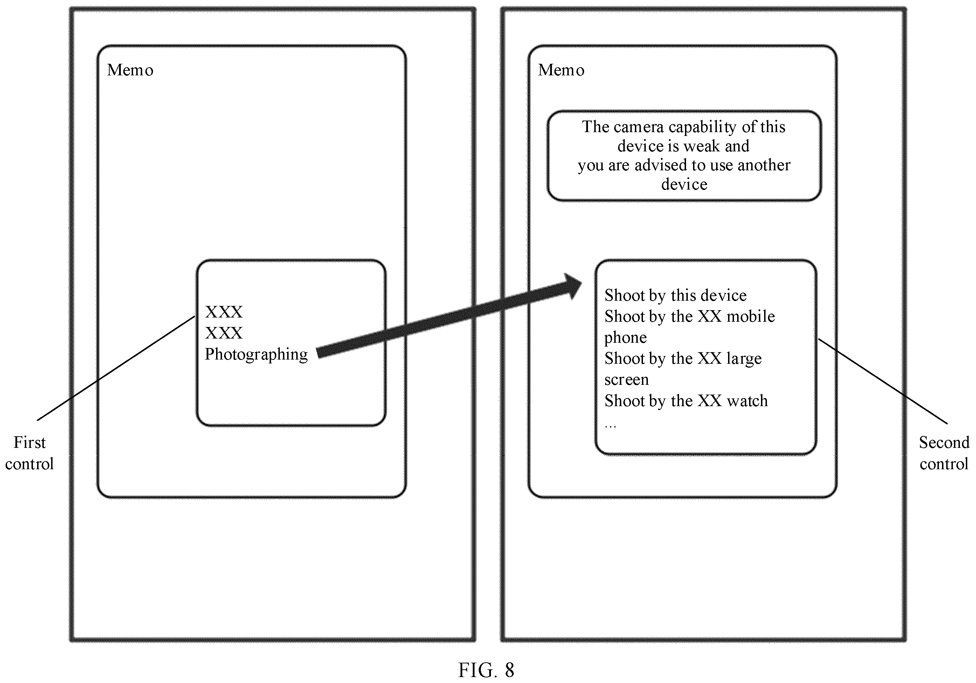

In another scenario, the first electronic device has a hardware device corresponding to the target service, but has a weak capability of providing the target service. For example, the first electronic device does not provide a zoom function or the like, and cannot take a high-quality photo. For example, the first electronic device is a mobile phone, the first application is a memo, and the target service is a shooting service. FIG. 8 is another diagram in which the first electronic device invokes the target service in the first application according to an embodiment of the present invention. As shown in FIG. 8, a first control is displayed on the interface of the first application, where the first control displays an option of at least one service, including the "shooting service". In response to an operation that the user taps the "shooting service" in the first control, the first electronic device displays a second control corresponding to the shooting service, where the second control displays at least one electronic device providing the target service. Because the first electronic device has a hardware device corresponding to the shooting service, "Shoot by this device" is also displayed in the second control. However, a camera capability of this device is weak. Therefore, prompt information "The camera capability of this device is weak and you are advised to use another device" is simultaneously displayed. Therefore, although the second control has the option "Shoot by this device", use of another device is more recommended.

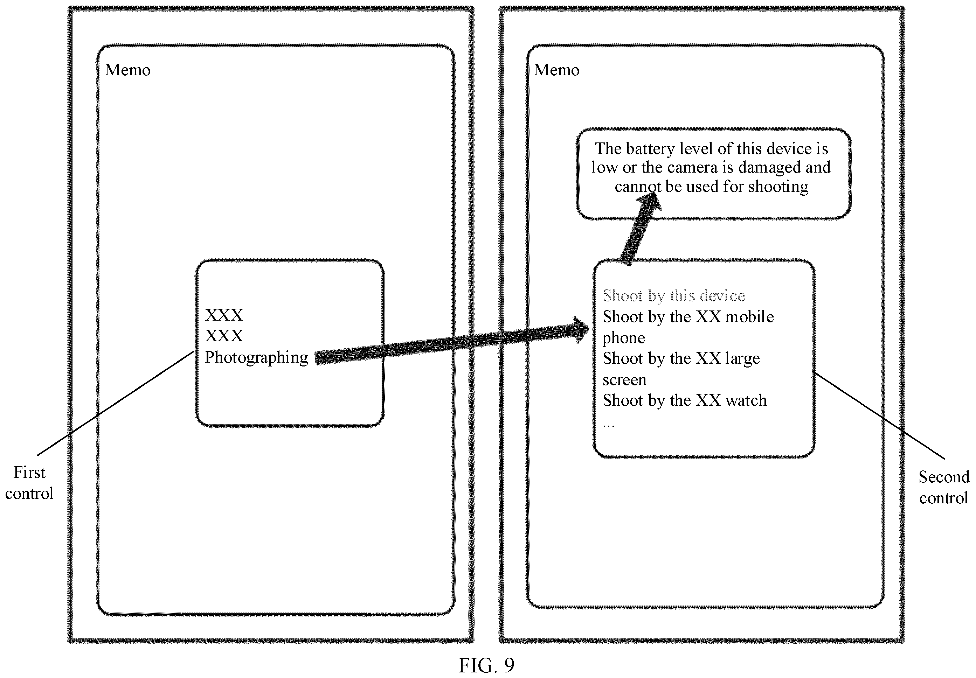

In another scenario, the first electronic device has a hardware device corresponding to the target service, but the first electronic device cannot provide the target service when a battery level of the first electronic device is low or a hardware function is damaged. For example, the first electronic device is a mobile phone, the first application is a memo, and the target service is a shooting service. FIG. 9 is another diagram in which the first electronic device invokes the target service in the first application according to an embodiment of the present invention. As shown in FIG. 9, a first control is displayed on the interface of the first application, where the first control displays an option of at least one service, including the "shooting service". In response to an operation that the user taps the "shooting service" in the first control, the first electronic device displays a second control corresponding to the shooting service. Because the first electronic device has a hardware device corresponding to the shooting service, "Shoot by this device" is also displayed in the second control. However, a battery level of the first electronic device is low or a hardware function is damaged, a camera capability is restricted, and the shooting service cannot be used. Therefore, the option "Shoot by this device" in the second control is dimmed and cannot be selected, and prompt information "The battery level of this device is low or the camera is damaged and cannot be used for shooting" is simultaneously displayed; or after the user selects the option "Shoot by this device" in the second control, the first electronic device gives clear prompt information "The battery level of this device is low or the camera is damaged and cannot be used for shooting", so that the user selects another electronic device option in the second control.

In embodiments of the present invention, before displaying the second control, the first electronic device further needs to obtain, based on the target service, at least one peripheral electronic device providing the target service, that is, find a device.

**Table 1 is a preset priority rule in embodiments of the present invention**

| Type | Priority | Internal priority | |
|---|---|---|---|
| Account management | Highest: level 0 | A same-account priority is higher than a different-account priority | |
| Device status | Second highest: level 1 | An active-state priority is higher than a sleep-state priority | |
| Device capability | Second highest: level 2 | A stronger target service capability indicates a higher priority | |
| Others | Low: level 3 | | 1. A higher device battery level indicates a higher priority |
| | | | 2. A better hardware device status indicates a higher priority |
| Customization | User customization | | 1. A higher use frequency of the user indicates a higher priority |
| | | | 2. The user performs priority customization as required |

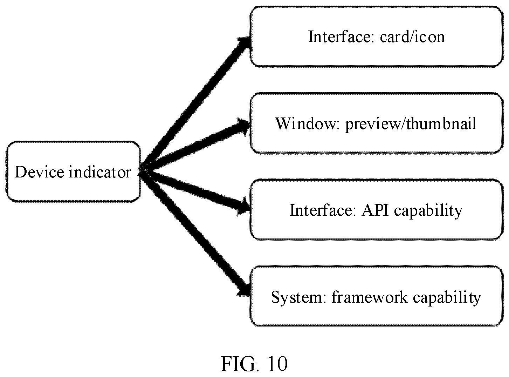

FIG. 10 is a diagram of a device indicator according to an embodiment of the present invention. The device indicator is mainly about understanding and determining of a current status of a device, for example, whether the device has a same account, whether the device is in a screen-off/sleep state, and whether the device has a camera shooting capability. As shown in FIG. 10, it is determined, through account management, that an electronic device providing the target service and the first electronic device have a same account or different accounts; it is determined, by using a device status, that an electronic device is in an active state or a sleep state; a device capability of an electronic device, that is, a target service capability (for example, a camera capability), can be determined by using a device model or a configuration; and a battery level, a hardware device status (for example, a camera status), or the like of an electronic device can be determined by using other methods. Table 1 is the preset priority rule in this embodiment of the present invention. As shown in Table 1, an electronic device that provides the target service and that has a same account as the first electronic device has a higher priority; an electronic device that provides the target service and that is in an active state has a higher priority; an electronic device that provides the target service and that has a stronger target service capability has a higher priority; or an electronic device that provides the target service and that has a higher battery level and a better hardware device status has a higher priority. The preset priority rule further includes customization. For example, a higher use frequency of the user indicates a higher priority; or the user performs priority customization as required. The first electronic device arranges and displays the at least one electronic device in the second control according to the preset priority rule. The user performs selection based on an electronic device recommended in the second control, and a friendly information prompt is also provided in a selection process, so as to better experience the function.

The first electronic device starts to invoke the target service of the second electronic device in response to an operation that the user selects the second electronic device option from the option of the at least one electronic device providing the target service in the second control. In a target service invoking process, if the invoking fails, the first electronic device displays a prompt of a failure cause, or re-sends the invoking request of the target service to the second electronic device. In this embodiment of the present invention, an invoking failure management solution is provided in a target service invoking process, so that the user can better experience the function.

In a process in which the first electronic device invokes the target service provided by the second electronic device, the first electronic device further needs to determine whether a service conflict exists between the first electronic device and the second electronic device, that is, whether both the first electronic device and the second electronic device need to use the target service. For example, the user is using a camera application of the second electronic device. In this case, if the first electronic device needs to invoke the second electronic device to provide the camera application, a service conflict occurs. One feasible solution is first-come first-served. Another feasible solution is a preemption mode. To be specific, a priority of the first electronic device is higher than a priority of the second electronic device, and the first electronic device directly has an initiative right after initiating invoking of the target service. Even if the second electronic device is occupying a second application that provides the target service, the second application also needs to be released first, and is preferentially invoked by the first electronic device. Still another feasible solution is an interactive request mode. To be specific, the first electronic device displays a prompt "Being used. Please wait", and the second electronic device also displays a prompt "The first electronic device applies for using the camera. Whether to release the camera". In conclusion, in the process in which the first electronic device invokes the target service provided by the second electronic device, if the second application of the second electronic device is occupied, the first electronic device waits for the second application to be idle, or preempts the second application. In this embodiment of the present invention, a conflict management solution is provided in a target service invoking process, so that the user can better experience the function.

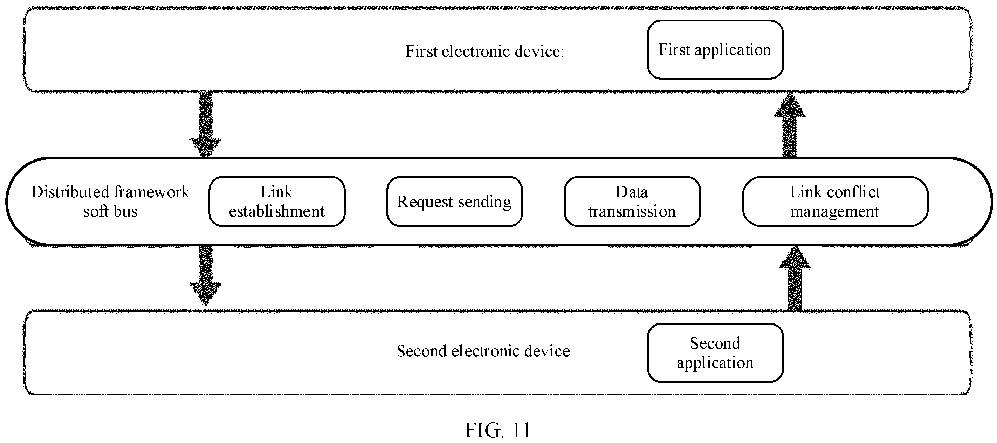

In this embodiment of the present invention, after the user taps the second electronic device option in the second control, the first electronic device and the second electronic device start to establish a link for interaction. FIG. 11 is a diagram of interaction between the first electronic device and the second electronic device according to an embodiment of the present invention. As shown in FIG. 11, the second electronic device includes the second application, the second application is different from the first application, and the second application provides the target service. A soft bus is a bridge between the first electronic device and the second electronic device, and mainly implements functions such as link establishment, request sending, data transmission, and link conflict management. Link establishment is generally a first step of synchronization between two devices, and is also a first step of collaboration between an initiator device and a processing device. A subsequent functional operation can be performed only after link establishment succeeds. After the first electronic device and the second electronic device complete link establishment, all operations are performed through request sending. A request is equivalent to a simple command, for example, [Start a camera application/service] or [Open a gallery application/service]. Different requests produce different results. For a specific request, a related application or service performs a related activity based on an initial requirement. However, there is still no data for collaboration between devices. In this case, specific data content needs to be transmitted and synchronized. Link conflict management means whether links between devices can be resolved in a one-to-one, one-to-many, or many-to-many manner. As long as service capabilities do not conflict, a link conflict management mechanism is established.

For example, in a process in which the first electronic device invokes the target service provided by the second electronic device, a link conflict may exist. For example, if a device B uses a camera capability of a device A and a device C uses a gallery capability of the device A, no link conflict exists; and if the device A is linked with both the device B and the device C, and both the device B and the device C need to use the camera capability, a link conflict exists, and a solution needs to be provided. One feasible solution is first-come first-served. Another feasible solution is a preemption mode. To be specific, a priority of the first electronic device is higher than a priority of another electronic device, and the first electronic device directly has an initiative right after initiating invoking of the target service. Even if the second application that is of the second electronic device and that provides the target service is being occupied, the second application also needs to be released first, and is preferentially invoked by the first electronic device. Still another feasible solution is an interactive request mode. To be specific, the first electronic device displays a prompt "Being used. Please wait", and the second electronic device also displays a prompt "The first electronic device applies for using the camera. Whether to release the camera". In conclusion, in the process in which the first electronic device invokes the target service provided by the second electronic device, if the second application of the second electronic device is occupied, the first electronic device waits for the second application to be idle, or preempts the second application. In this embodiment of the present invention, a conflict management solution is provided in a target service invoking process, so that the user can better experience the function.

Interaction between devices is bidirectional. The initiator device and the processing device are not completely fixed and can be exchanged in different scenarios. Invoking of a camera service is used as an example. The second electronic device starts the second application, that is, a camera application, and generates a shooting result. In a scenario in which the second electronic device transfers the shooting result back to the first electronic device, because the second electronic device initiates the transfer, the second electronic device becomes an initiator device of this scenario.

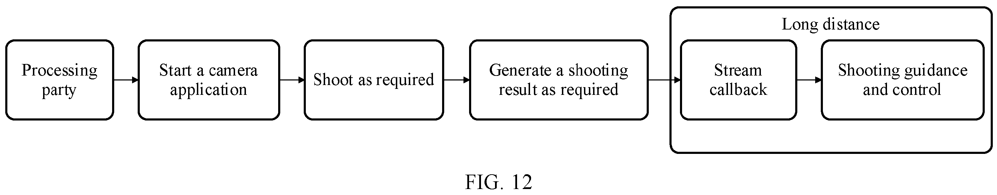

FIG. 12 is a diagram of service invoking processing of the second electronic device according to an embodiment of the present invention. A camera service is used as an example. As shown in FIG. 12, after receiving an invoking request of the camera service, the second electronic device, as a processing party, starts a camera application, performs shooting as required, and then generates a shooting result as required. Performing shooting as required means that the user selects different mode options as required, such as [Photographing], [Video recording], [Slow-mo], and [Dual-view video recording], and the user may further select different function options as required, such as [Beautification], [Wide-angle], and [Exposure]. Generating a shooting result as required means that the user selects, as required, whether select to locally store the shooting result. As an initiator of invoking the camera service, the first electronic device needs to store the shooting result by default, but whether the second electronic device needs to store the shooting result may be determined based on selection of the user. Generally, when a single person can directly operate the first electronic device and the second electronic device, the user may directly operate the second electronic device. However, when a single person can directly operate the first electronic device but cannot directly operate the second electronic device, for example, when a distance between the first electronic device and the second electronic device is long, the second electronic device needs to enable a stream callback function, and synchronize a display and processing interface of the second electronic device to a device of the first electronic device, so that the user performs, on the first electronic device, shooting guidance and control on the second electronic device.

For example, when the distance between the first electronic device and the second electronic device is short, a link may be established between the first electronic device and the second electronic device through Bluetooth, Wi-Fi, or P2P.

For example, when the distance between the first electronic device and the second electronic device is long, a link may be established between the first electronic device and the second electronic device through end cloud connection or account authentication.

In a scenario in which the user directly operates the first electronic device and the second electronic device, the first electronic device sends an invoking request of a target service to the second electronic device in response to a first operation that the user invokes the target service in the first application, where the invoking request indicates the second electronic device to use the second application to provide the target service, and the second application is installed on the second electronic device. That the first electronic device sends an invoking request of a target service to the second electronic device in response to a first operation that the user invokes the target service in the first application includes: The first electronic device displays a first control on an interface of the first application, where the first control is used to display an option of at least one service; in response to an operation that the user selects a target service option from the option of the at least one service in the first control, the first electronic device displays a second control corresponding to the target service, where the second control is used to display an option of at least one electronic device providing the target service; and the first electronic device sends the invoking request to the second electronic device in response to an operation that the user selects a second electronic device option from the option of the at least one electronic device providing the target service in the second control. Specifically, the first electronic device sends the invoking request of the target service to the second electronic device through a network link between the first electronic device and the second electronic device. In response to a second operation performed by the user on the second application in the second electronic device, the first electronic device automatically receives first information that is generated by the second application and that is sent by the second electronic device. The second electronic device starts the second application based on the invoking request, and generates the first information by using the second application.

In an optional manner, after generating the first information, the second electronic device directly sends the first information to the first electronic device; and the first electronic device locally stores the first information, and displays second information on the interface of the first application based on the first information. In this embodiment of the present invention, the first information is stored in the first electronic device by default. Therefore, after generating the first information, the second electronic device directly sends the first information to the first electronic device without any user operation. The entire process brings imperceptible experience to the user.

The first information is the same as or different from the second information. When the first information is different from the second information, the second information is generated by the first electronic device through conversion based on the first information.

For example, both the first electronic device and the second electronic device are smartphones, the target service is a photographing service, the first information is a color image, and the second information is also a color image, so that the first information is the same as the second information.

For example, the first electronic device is an electronic ink screen reader, the second electronic device is a smartphone, the target service is a photographing service, the first information is a color image, and the second information is a black-and-white image or a grayscale image corresponding to the first information, so that the first information is different from the second information.

Optionally, the first electronic device locally stores the first information based on a storage structure of the first electronic device. For example, the first electronic device is an electronic ink screen reader, the second electronic device is a smartphone, the target service is a photographing service, and the first information is a picture. Because the electronic ink screen reader does not have a default storage location for storing a picture, the electronic ink screen reader needs to store a picture based on a storage structure of the electronic ink screen reader.

In another optional manner, after the second electronic device generates the first information, the first electronic device sends a storage instruction to the second electronic device, where the storage instruction indicates that a storage location of the first information includes the first electronic device; and the second electronic device sends the first information to the first electronic device based on the storage instruction.

In still another optional manner, after generating the first information, the second electronic device displays a fourth control, where the fourth control is used to display a storage location option for storing the first information, and the storage location option includes a first electronic device option and a second electronic device option. The second electronic device sends the first information to the first electronic device in response to an operation performed by the user on the fourth control. Specifically, when the user selects the first electronic device option, the second electronic device sends the first information to the first electronic device; or when the user selects the first electronic device option and the second electronic device option, the second electronic device locally stores the first information, and sends the first information to the first electronic device. The first electronic device displays the second information on the interface of the first application based on the first information. Optionally, the first electronic device option in the fourth control may be set to a selected state by default. In this case, the user only needs to select whether to store the first information in the second electronic device.

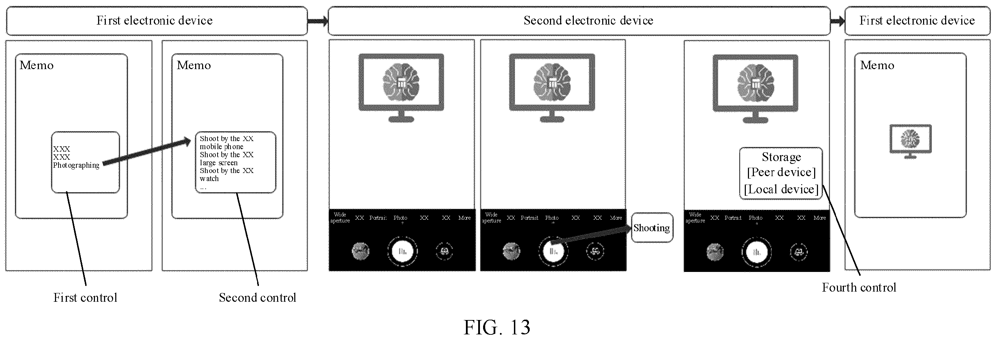

Invoking of a camera service is used as an example. FIG. 13 is a diagram of a target service invoking process according to an embodiment of the present invention. As shown in FIG. 13, the first electronic device is a mobile phone, the first application is a memo, the second electronic device is an "XX mobile phone", and the second application is a camera application. After the user taps "Shoot by the XX mobile phone" in the second control, the "XX mobile phone" starts the camera application and displays an image shooting interface of the camera application. The user may directly pick up the "XX mobile phone" to perform shooting. After the user taps a shooting button, the "XX mobile phone" generates a captured image and displays a fourth control simultaneously. The fourth control is used to display a storage location option for storing the captured image, and the storage location option includes a [Peer device] option and a [Local device] option. When the user selects only the [Peer device] option, the "XX mobile phone" sends the captured image to the first electronic device. When the user selects the [Peer device] option and the [Local device] option, the "XX mobile phone" locally stores the captured image, and sends the captured image to the first electronic device. The first electronic device stores the captured image, and displays the captured image on an interface of the memo based on the captured image. The [Peer device] option in the fourth control may be in a selected state by default.

In a scenario in which the user can directly operate the first electronic device but cannot directly operate the second electronic device, a display area of a target service window needs to be established on the interface of the first application in the first electronic device, a stream callback function is used to synchronize a display and processing interface of the second electronic device to the target service window of the first electronic device, so as to perform better guidance and operation. The first electronic device sends an invoking request of a target service to the second electronic device in response to a first operation that the user invokes the target service in the first application, where the invoking request indicates the second electronic device to use the second application to provide the target service, and the second application is installed on the second electronic device. In response to a second operation performed by the user on the second application in the first electronic device or the second electronic device, the first electronic device automatically receives first information that is generated by the second application and that is sent by the second electronic device. That the first electronic device responds to a second operation performed by the user on the second application in the first electronic device or the second electronic device includes: The first electronic device opens a target service window on the interface of the first application, where the target service window is used to display an interface of the second application; and sends a control instruction to the second electronic device in response to an operation performed by the user on the target service window. The second electronic device starts the second application based on the invoking request, displays the interface of the second application, and sends interface information of the second application to the first electronic device. The first electronic device displays the interface of the second application in the target service window based on the interface information. The second electronic device performs, based on the control instruction, a control operation corresponding to the control instruction, where the control operation includes generating the first information.

In an optional manner, after generating the first information, the second electronic device directly sends the first information to the first electronic device; and the first electronic device displays second information on the interface of the first application based on the first information. In this embodiment of the present invention, the first information is stored in the first electronic device by default. Therefore, after generating the first information, the second electronic device directly sends the first information to the first electronic device without any user operation. The entire process brings imperceptible experience to the user.

The first information is the same as or different from the second information. When the first information is different from the second information, the second information is generated by the first electronic device based on the first information.

Optionally, after displaying the second information in the first application based on the first information, the first electronic device automatically closes the target service window. The first electronic device has completed invoking of the target service, so that the target service window can be automatically closed.

Optionally, after automatically receiving the first information that is generated by the second application and that is sent by the second electronic device, the first electronic device locally stores the first information based on a storage structure of the first electronic device.

In another optional manner, after the second electronic device generates the first information, the first electronic device sends a storage instruction to the second electronic device, where the storage instruction indicates that a storage location of the first information includes the first electronic device; and the second electronic device sends the first information to the first electronic device based on the storage instruction.

In still another optional manner, after generating the first information, the second electronic device displays a fourth control, where the fourth control is used to display a storage location option for storing the first information, and the storage location option includes a first electronic device option and a second electronic device option. The first electronic device sends a storage instruction to the second electronic device in response to an operation performed by the user on a storage location option in the target service window, where the storage instruction indicates that a storage location of the first information is the first electronic device, or the storage instruction indicates that storage location of the first information is the first electronic device and the second electronic device. The second electronic device sends the first information to the first electronic device based on the storage instruction. Specifically, when the storage instruction indicates that the storage location of the first information is the first electronic device, the second electronic device sends the first information to the first electronic device; or when the storage instruction indicates that the storage location of the first information is the first electronic device and the second electronic device, the second electronic device locally stores the first information, and sends the first information to the first electronic device. The first electronic device displays the second information on the interface of the first application based on the first information. Optionally, the first electronic device option in the fourth control may be set to a selected state by default. In this case, the user only needs to select whether to store the first information in the second electronic device.

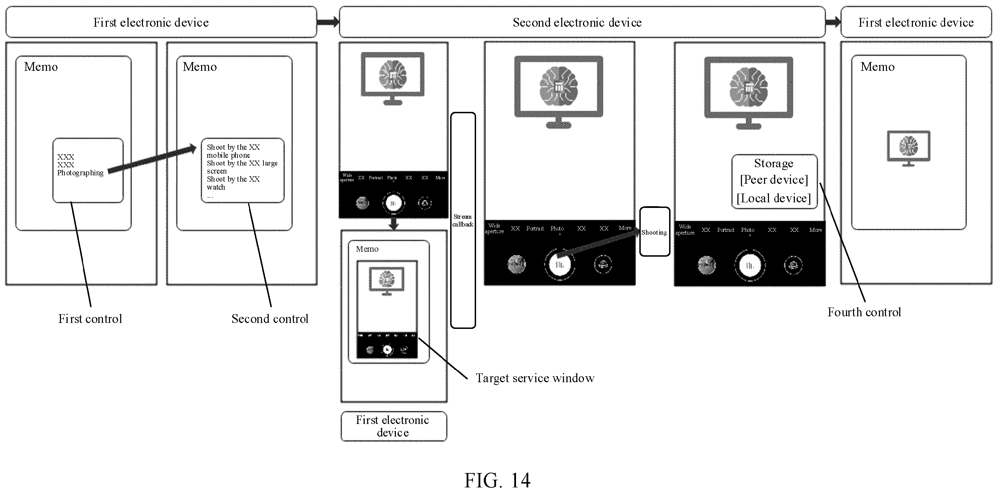

Invoking of a camera service is used as an example. FIG. 14 is another diagram of a target service invoking process according to an embodiment of the present invention. As shown in FIG. 14, the first electronic device is a mobile phone, the first application is a memo, the second electronic device is "XX mobile phone", and the second application is a camera application. After the user taps "Shoot by the XX mobile phone" in the second control, the "XX mobile phone" starts the camera application and displays an image shooting interface of the camera application. Because the user cannot directly operate the "XX mobile phone" to perform shooting, by using a stream callback function, the first electronic device displays a target service window on an interface of the memo, the target service window displays an image shooting interface of the camera application of the "XX mobile phone" in real time, the user remotely controls the second electronic device by tapping the target service window, the user selects different mode options in the target service window as required, such as [Photographing], [Video recording], [Slow-mo], and [Dual-view recording], and the user can also select different function options as required, such as [Beautification], [Wide-angle], and [Exposure]. After generating a captured image, the second electronic device displays a fourth control, where the fourth control is used to display a storage location option for storing the captured image, and the storage location option includes a [Peer device] option and a [Local device] option. When the user selects the [Peer device] option in the target service window, the "XX mobile phone" sends the captured image to the first electronic device. When the user selects the [Peer device] option and the [Local device] option in the target service window, the "XX mobile phone" locally stores the captured image, and sends the captured image to the first electronic device. The first electronic device stores the captured image, and displays the captured image on an interface of the memo based on the captured image. The [Peer device] option in the fourth control may be in a selected state by default.

The stream callback function can be enabled based on a specific distance or can be directly enabled based on a user request.

Optionally, before opening the target service window, the first electronic device may obtain a distance between the first electronic device and the second electronic device; and if the distance between the first electronic device and the second electronic device is greater than or equal to a first threshold, automatically opens the target service window on the interface of the first application; or if the distance between the first electronic device and the second electronic device is less than the first threshold, does not open the target service window. When the distance between the first electronic device and the second electronic device is long enough, the first electronic device considers by default that the user cannot directly operate the second electronic device, and therefore opens the target service window on the interface of the first application; or when the distance between the first electronic device and the second electronic device is short, the first electronic device considers by default that the user can directly operate the second electronic device, and therefore does not open the target service window on the interface of the first application.

Optionally, before opening the target service window, the first electronic device displays a third control on the interface of the first application, and opens the target service window on the interface of the first application in response to an operation performed by the user on the third control. Therefore, the user may open the target service window based on a request by manually operating the third control. Therefore, the user may open the target service window as required by operating the third control. Therefore, in any scenario, as long as the user wants to open the target service window, the user can open the target service window at any time.

It can be learned from the foregoing that, when the first information is different from the second information, the first electronic device displays the second information after converting the first information into the second information. This embodiment of the present invention further provides an optional solution. The second electronic device may obtain a model and/or configuration information of the first electronic device; and after generating the first information, convert the first information into the second information based on the model and/or the configuration information of the first electronic device, and send the second information to the first electronic device. Therefore, the first electronic device directly displays the second information without conversion.

This embodiment of the present invention further provides another optional solution. The second electronic device may obtain a model and/or configuration information of the first electronic device, select, by using the second application, a mode corresponding to the model and/or the configuration information of the first electronic device, directly generate the second information, and send the second information to the first electronic device. Therefore, the first electronic device directly displays the second information without conversion.

For example, the first electronic device is an electronic ink screen reader, the second electronic device is a smartphone, and the target service is a photographing service. The smartphone may obtain a model and/or configuration information of the electronic ink screen reader, take a photo in a black-and-white mode in a camera application to generate a black-and-white photo, and send the black-and-white photo to the electronic ink screen reader.

According to the service invoking system provided in this embodiment of the present invention, a cross-device target service is provided, so that an electronic device having no target function or having a weak target function may initiate an invoking request of the target service in any application, select a target service interface for connecting to a peripheral device, and provide a user with imperceptible target service experience by using a target function of a peer device.

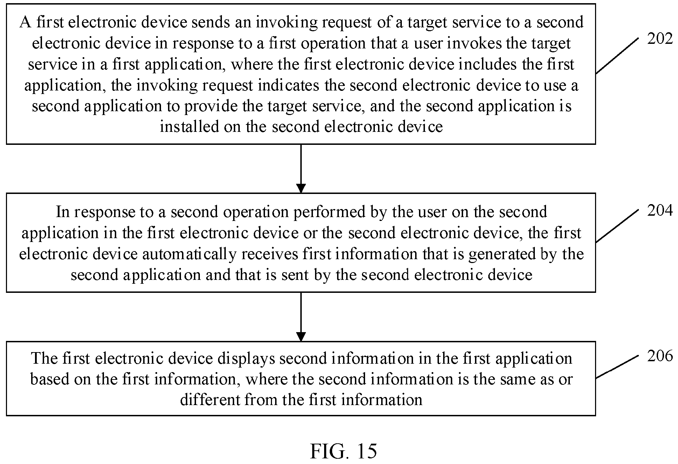

Based on the foregoing service invoking system, an embodiment of the present invention provides a service invoking method. FIG. 15 is a flowchart of a service invoking method according to an embodiment of the present invention. As shown in FIG. 15, the method includes the following steps.

Step 202: A first electronic device sends an invoking request of a target service to a second electronic device in response to a first operation that a user invokes the target service in a first application, where the first electronic device includes the first application, the invoking request indicates the second electronic device to use a second application to provide the target service, and the second application is installed on the second electronic device.

Step 204: In response to a second operation performed by the user on the second application in the first electronic device or the second electronic device, the first electronic device automatically receives first information that is generated by the second application and that is sent by the second electronic device.

Step 206: The first electronic device displays second information in the first application based on the first information, where the second information is the same as or different from the first information.

In the service invoking method provided in this embodiment of the present invention, the first electronic device includes the first application; the first electronic device sends the invoking request of the target service to the second electronic device in response to the first operation that the user invokes the target service in the first application, where the invoking request indicates the second electronic device to use the second application to provide the target service, and the second application is installed on the second electronic device; in response to the second operation performed by the user on the second application in the first electronic device or the second electronic device, the first electronic device automatically receives the first information that is generated by the second application and that is sent by the second electronic device; and the first electronic device displays the second information in the first application based on the first information, where the second information is the same as or different from the first information. In this embodiment of the present invention, a cross-device target service is provided, so that an electronic device having no target function or having a weak target function may initiate an invoking request of the target service in any application, select a target service interface for connecting to a peripheral device, and provide the user with imperceptible target service experience by using a target function of a peer device.

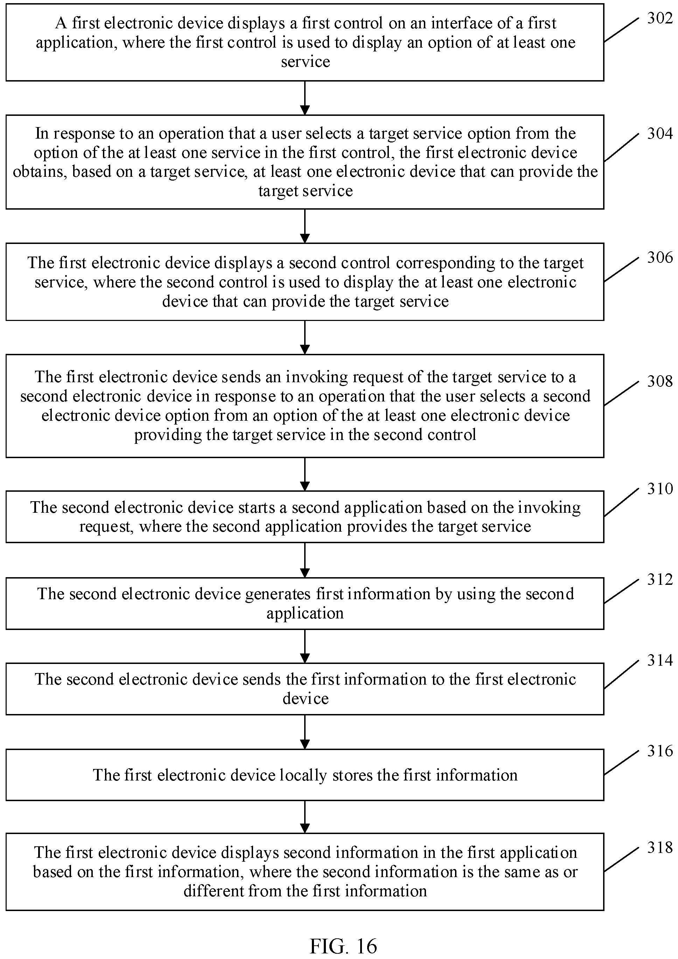

Based on the foregoing service invoking system, an embodiment of the present invention provides another service invoking method. FIG. 16 is a flowchart of another service invoking method according to an embodiment of the present invention. As shown in FIG. 16, the method includes the following steps.

Step 302: A first electronic device displays a first control on an interface of a first application, where the first control is used to display an option of at least one service.

In this embodiment of the present invention, the first electronic device includes the first application. In this embodiment of the present invention, service types include an interface, a window, an interface, and a system, and the service types can be adaptively converted to each other.

Step 304: In response to an operation that a user selects a target service option from the option of the at least one service in the first control, the first electronic device obtains, based on the target service, at least one electronic device that can provide the target service.

Step 306: The first electronic device displays a second control corresponding to the target service, where the second control is used to display the at least one electronic device that can provide the target service.

In this step, the first electronic device displays, on the interface of the first application, the second control corresponding to the target service.

In this embodiment of the present invention, step 306 specifically includes: The first electronic device arranges and displays, in the second control according to a preset priority rule, the at least one electronic device providing the target service.

For example, the preset priority rule includes that an electronic device that provides the target service and that has a same account as the first electronic device has a higher priority.

For example, the preset priority rule further includes that an electronic device that provides the target service and that is in an active state has a higher priority.

For example, the preset priority rule includes that an electronic device that provides the target service and that has a stronger target service capability has a higher priority.

For example, the preset priority rule includes that an electronic device that provides the target service and that has a higher battery level and a better hardware device status has a higher priority.

Step 308: The first electronic device sends an invoking request of the target service to a second electronic device in response to an operation that the user selects a second electronic device option from an option of the at least one electronic device providing the target service in the second control.

In a scenario in which the user directly operates the first electronic device and the second electronic device, after the first electronic device sends the invoking request to the second electronic device, the user can directly operate the second electronic device.

In a scenario in which the user can operate the first electronic device but cannot operate the second electronic device, after step 312, the method further includes: The first electronic device opens a target service window on the interface of the first application.

In an optional solution, before the first electronic device opens the target service window, the first electronic device displays a third control on the interface of the first application; and the first electronic device opens the target service window on the interface of the first application in response to an operation performed by the user on the third control.

In another optional solution, before the first electronic device opens the target service window, the first electronic device obtains a distance between the first electronic device and the second electronic device; and if the distance between the first electronic device and the second electronic device is greater than or equal to a first threshold, the first electronic device opens the target service window on the interface of the first application; or if the distance between the first electronic device and the second electronic device is less than the first threshold, the first electronic device does not open the target service window on the interface of the first application.

Optionally, if the second application is occupied, the first electronic device waits for the second application to be idle, or preempts the second application.

Optionally, if the target service fails to be invoked, the first electronic device displays a prompt of a failure cause, or re-sends the invoking request of the target service to the second electronic device.

Step 310: The second electronic device starts the second application based on the invoking request, where the second application provides the target service.

In this embodiment of the present invention, the second electronic device includes the second application.

Step 312: The second electronic device generates first information by using the second application.

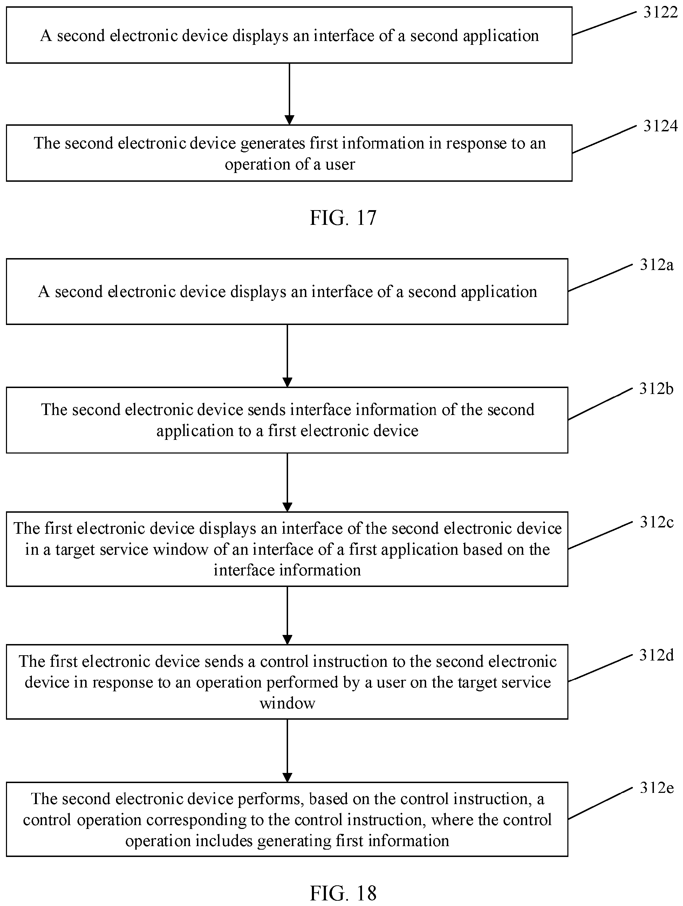

Optionally, in a scenario in which the user directly operates the first electronic device and the second electronic device, as shown in FIG. 17, step 312 specifically includes the following steps:
Step 3122: The second electronic device displays an interface of the second application.
Step 3124: The second electronic device generates the first information in response to an operation of the user.

Optionally, in a scenario in which the user can operate the first electronic device but cannot operate the second electronic device, as shown in FIG. 18, step 312 specifically includes the following steps:
Step 312a: The second electronic device displays an interface of the second application.
Step 312b: The second electronic device sends interface information of the second application to the first electronic device.
Step 312c: The first electronic device displays an interface of the second electronic device in the target service window of the interface of the first application based on the interface information.
Step 312d: The first electronic device sends a control instruction to the second electronic device in response to an operation performed by the user on the target service window.
Step 312e: The second electronic device performs, based on the control instruction, a control operation corresponding to the control instruction, where the control operation includes generating the first information.
Step 314: The second electronic device sends the first information to the first electronic device.

Optionally, after generating the first information, the second electronic device directly sends the first information to the first electronic device; or after the second electronic device generates the first information, the second electronic device notifies the first electronic device, the first electronic device sends a storage instruction to the second electronic device, and the second electronic device sends the first information to the first electronic device based on the storage instruction without a user operation. After the second electronic device generates the first information, the second electronic device further displays a fourth control, where the fourth control is used to display a storage location option for storing the first information, and the storage location option includes the second electronic device option; and the second electronic device locally stores the first information in response to an operation that the user selects the second electronic device option from the storage location option in the fourth control.

Optionally, in a scenario in which the user directly operates the first electronic device and the second electronic device, before step 314, the method further includes: After generating the first information, the second electronic device displays a fourth control, where the fourth control is used to display a storage location option for storing the first information, and the storage location option includes a first electronic device option and the second electronic device option. Step 314 specifically includes: The second electronic device sends the first information to the first electronic device in response to an operation that the user selects the first electronic device option from the storage location option in the fourth control.

Optionally, in a scenario in which the user can operate the first electronic device but cannot operate the second electronic device, before step 314, the method further includes: The second electronic device displays a fourth control, where the fourth control is used to display a storage location option for storing the first information, and the storage location option includes a first electronic device option and the second electronic device option; and the first electronic device sends a storage instruction to the second electronic device in response to an operation performed by the user on the target service window, where the storage instruction indicates that a storage location of the first information includes the first electronic device. Step 314 specifically includes: The second electronic device sends the first information to the first electronic device based on the storage instruction.

Step 316: The first electronic device locally stores the first information.

Optionally, step 316 specifically includes: The first electronic device locally stores the first information based on a storage structure of the first electronic device.

Step 318: The first electronic device displays second information in the first application based on the first information, where the second information is the same as or different from the first information.

When the second information is different from the first information, the first electronic device generates the second information through conversion based on the first information.

For example, the target service is a camera service, the first information is a color image, the first electronic device is an electronic ink screen reader, and the second information is a grayscale image corresponding to the color image.

In the technical solution of the service invoking method provided in this embodiment of the present invention, the first electronic device sends the invoking request of the target service to the second electronic device in response to the first operation that the user invokes the target service in the first application, where the invoking request indicates the second electronic device to use the second application to provide the target service, and the second application is installed on the second electronic device; in response to the second operation performed by the user on the second application in the first electronic device or the second electronic device, the first electronic device automatically receives the first information that is generated by the second application and that is sent by the second electronic device; and the first electronic device displays the second information in the first application based on the first information, where the second information is the same as or different from the first information. In this embodiment of the present invention, a cross-device target service is provided, so that an electronic device having no target function or having a weak target function may initiate an invoking request of the target service in any application, select a target service interface for connecting to a peripheral device, and provide a user with imperceptible target service experience by using a target function of a peer device.

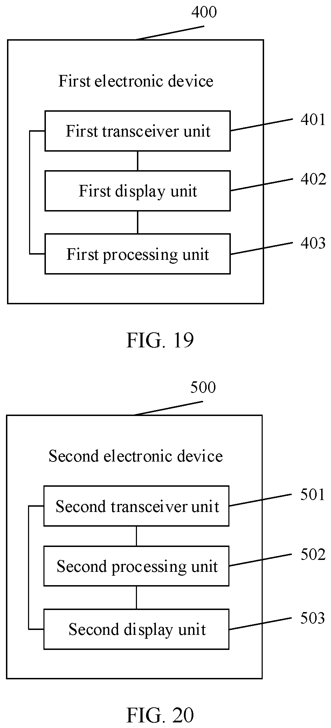

FIG. 19 is a diagram of a structure of a first electronic device according to an embodiment of the present invention. It should be understood that the first electronic device 400 can perform steps of the first electronic device in the foregoing service invoking method. To avoid repetition, details are not described herein again. The first electronic device 400 includes a first transceiver unit 401, a first display unit 402, and a first processing unit 403.

The first transceiver unit 401 is configured to: send an invoking request of a target service to a second electronic device in response to a first operation that a user invokes the target service in the first application, where the invoking request indicates the second electronic device to use a second application to provide the target service, and the second application is installed on the second electronic device; and in response to a second operation performed by the user on the second application in the first electronic device or the second electronic device, automatically receive first information that is generated by the second application and that is sent by the second electronic device.

The first display unit 402 is configured to display second information in the first application based on the first information, where the second information is the same as or different from the first information.

Optionally, when the second information is different from the first information, the first processing unit 403 is configured to generate the second information through conversion based on the first information.

Optionally, the first display unit 402 is configured to: display a first control on an interface of the first application, where the first control is used to display an option of at least one service; and in response to an operation that the user selects a target service option from the option of the at least one service in the first control, display a second control corresponding to the target service, where the second control is used to display at least one electronic device providing the target service.

The first processing unit 403 is configured to send the invoking request to the second electronic device through a network link between the first electronic device and the second electronic device in response to an operation that the user selects a second electronic device option from the option of the at least one electronic device providing the target service in the second control.

Optionally, before the first display unit 402 displays the second control corresponding to the target service, the first processing unit 403 is further configured to obtain, based on the target service, the at least one electronic device providing the target service.

Optionally, the first display unit 402 is specifically configured to arrange and display the at least one electronic device in the second control according to a preset priority rule.

Optionally, a service type includes an interface, a window, an interface, or a system.

Optionally, service types can be adaptively converted to each other.

Optionally, the first processing unit 403 is further configured to: if the second application is occupied, wait for the second application to be idle, or preempt the second application.

Optionally, if the target service fails to be invoked, the first display unit 402 is further configured to display a prompt of a failure cause, or the first transceiver unit 401 is further configured to re-send the invoking request of the target service to the second electronic device.

Optionally, the first processing unit 403 is configured to open a target service window on the interface of the first application, where the target service window is used to display an interface of the second application; and the first transceiver unit 401 is configured to send a control instruction to the second electronic device in response to an operation performed by the user on the target service window.

Optionally, after the first display unit 402 displays the second information in the first application based on the first information, the first processing unit 403 is further configured to automatically close the target service window.

Optionally, before the first processing unit 403 opens the target service window on the interface of the first application, the first display unit 402 is further configured to display a third control on the interface of the first application.

The first processing unit 403 is specifically configured to open the target service window on the interface of the first application in response to an operation performed by the user on the third control.

Optionally, before the first processing unit 403 opens the target service window on the interface of the first application, the first processing unit 403 is further configured to: obtain a distance between the first electronic device and the second electronic device; and if the distance between the first electronic device and the second electronic device is greater than or equal to a first threshold, open the target service window on the interface of the first application; or
if the distance between the first electronic device and the second electronic device is less than the first threshold, skip opening the target service window on the interface of the first application.

Optionally, before the first transceiver unit 401 automatically receives the first information that is generated by the second application and that is sent by the second electronic device, the first transceiver unit 401 is further configured to: after the second electronic device generates the first information, send a storage instruction to the second electronic device, where the storage instruction indicates that a storage location of the first information includes the first electronic device; and receive the first information sent by the second electronic device.

Optionally, after the first transceiver unit 401 automatically receives the first information that is generated by the second application and that is sent by the second electronic device, the first processing unit 403 is further configured to locally store the first information based on a storage structure of the first electronic device.

Optionally, the target service includes a camera service.

Optionally, the first information is a color image, the first electronic device is an electronic ink screen reader, and the second information is a grayscale image corresponding to the color image.

Optionally, the preset priority rule includes that an electronic device that provides the target service and that has a same account as the first electronic device has a higher priority.

Optionally, the preset priority rule includes that an electronic device that provides the target service and that is in an active state has a higher priority.

Optionally, the preset priority rule includes that an electronic device that provides the target service and that has a stronger target service capability has a higher priority.

Optionally, the preset priority rule includes that an electronic device that provides the target service and that has a higher battery level and a better hardware device status has a higher priority.

FIG. 20 is a diagram of a structure of a second electronic device according to an embodiment of the present invention. It should be understood that the second electronic device 500 can perform steps of the second electronic device in the foregoing service invoking method. To avoid repetition, details are not described herein again. The second electronic device 500 includes a second transceiver unit 501, a second processing unit 502, and a second display unit 503.

The second processing unit 502 is configured to: start a second application based on an invoking request that is of a target service and that is sent by a first electronic device, where the second application provides the target service; and generate first information by using the second application.

The second transceiver unit 501 is configured to send the first information to the first electronic device, where the first electronic device includes a first application, and the first application is different from the second application, so that the first electronic device displays second information on an interface of the first application based on the first information, where the second information is the same as or different from the first information.

Optionally, the second display unit 503 is configured to display an interface of the second application; and the second processing unit 502 is specifically configured to generate the first information in response to an operation of a user.

Optionally, the second display unit 503 is configured to display an interface of the second application; and the second transceiver unit 501 is specifically configured to send interface information of the second application to the first electronic device, so that the first electronic device displays an interface of the second electronic device in a target service window of the interface of the first application based on the interface information; and receive a control instruction sent by the first electronic device.

The second processing unit 502 is specifically configured to perform, based on the control instruction, a control operation corresponding to the control instruction, where the control operation includes generating the first information.

Optionally, after the second processing unit 502 generates the first information by using the second application, the second display unit 503 is further configured to display a fourth control, where the fourth control is used to display a storage location option for storing the first information, and the storage location option includes a second electronic device option; and the second processing unit 502 is further configured to locally store the first information in response to an operation that the user selects the second electronic device option from the storage location option in the fourth control.

Optionally, after the second processing unit 502 generates the first information by using the second application, the second display unit 503 is further configured to display a fourth control, where the fourth control is used to display a storage location option for storing the first information, and the storage location option includes a first electronic device option and a second electronic device option.

The second transceiver unit 501 is specifically configured to send the first information to the first electronic device in response to an operation that the user selects the first electronic device option from the storage location option in the fourth control.

Optionally, before the second transceiver unit 501 sends the first information to the first electronic device, the second transceiver unit 501 is further configured to receive a storage instruction sent by the first electronic device, where the storage instruction indicates that a storage location of the first information includes the first electronic device; and the second transceiver unit 501 is further configured to send the first information to the first electronic device based on the storage instruction.

Optionally, the target service includes a camera service.

Optionally, the first information is a color image, the first electronic device is an electronic ink screen reader, and the second information is a grayscale image corresponding to the color image.

It should be understood that the first electronic device 400 and the second electronic device 500 herein are embodied in a form of functional units. A term "unit" herein may be implemented in a form of software and/or hardware. This is not specifically limited. For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the examples described in embodiments of the present invention can be implemented by using electronic hardware, or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of the present invention.

An embodiment of this application provides an electronic device. The electronic device may be a terminal device or a circuit device built into the terminal device. The electronic device may be configured to perform the functions/steps in the foregoing method embodiments.

An embodiment of this application provides a computer-readable storage medium. The computer-readable storage medium stores instructions. When the instructions are run on a terminal device, the terminal device is enabled to perform the functions/steps in the foregoing method embodiments.

An embodiment of this application further provides a computer program product including instructions. When the computer program product runs on a computer or any at least one processor, the computer is enabled to perform the functions/steps in the foregoing method embodiments.

In embodiments of this application, "at least one" means one or more, and "a plurality of" means two or more. In addition, "and/or" describes an association relationship between associated objects and represents that three relationships may exist. For example, A and/or B may represent the following cases: Only A exists, both A and B exist, and only B exists. A and B may be singular or plural. A character "/" generally indicates an "or" relationship between the associated objects. In addition, "at least one of the following items" or a similar expression thereof means any combination of these items, including any combination of singular items or plural items. For example, at least one of a, b, and c may indicate: a, b, c, a and b, a and c, b and c, or a, b, and c, where a, b, and c may be singular or plural.

A person of ordinary skill in the art may be aware that the units and algorithm steps described in embodiments disclosed in this specification can be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing an electronic device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A service invoking method, applied to a first electronic device, wherein the first electronic device comprises a first application, and the method comprises:
sending an invoking request of a target service to a second electronic device in response to a first operation that a user invokes the target service in the first application, wherein the invoking request indicates the second electronic device to use a second application to provide the target service, and the second application is installed on the second electronic device;
in response to a second operation performed by the user on the second application in the first electronic device or the second electronic device, automatically receiving first information that is generated by the second application and that is sent by the second electronic device; and
displaying second information in the first application based on the first information, wherein the second information is the same as or different from the first information.

2. The method according to claim 1, wherein the second information is different from the first information, and the method further comprises:
generating the second information through conversion based on the first information.

3. The method according to claim 1 or 2, wherein the sending an invoking request of a target service to a second electronic device in response to a first operation that a user invokes the target service in the first application comprises: displaying a first control on an interface of the first application, wherein the first control is used to display an option of at least one service;
in response to an operation that the user selects a target service option from the option of the at least one service in the first control, displaying a second control corresponding to the target service, wherein the second control is used to display an option of at least one electronic device providing the target service; and
sending, by the first electronic device, the invoking request to the second electronic device in response to an operation that the user selects a second electronic device option from the option of the at least one electronic device providing the target service in the second control.

4. The method according to claim 3, wherein before the displaying a second control corresponding to the target service, the method further comprises:
obtaining, based on the target service, the at least one electronic device providing the target service.

5. The method according to claim 2 or 3, wherein that the second control is used to display an option of at least one electronic device providing the target service comprises:
arranging and displaying, in the second control according to a preset priority rule, the at least one electronic device providing the target service.

6. The method according to any one of claims 1 to 5, wherein the sending an invoking request of a target service to a second electronic device, wherein the invoking request indicates the second electronic device to use a second application to provide the target service comprises:
if the second application is occupied, waiting for the second application to be idle, or preempting the second application.

7. The method according to any one of claims 1 to 6, wherein the method further comprises:
if the target service fails to be invoked, displaying a prompt of a failure cause, or re-sending the invoking request of the target service to the second electronic device.

8. The method according to any one of claims 1 to 7, wherein the responding to a second operation performed by the user on the second application in the first electronic device comprises:
opening a target service window on the interface of the first application, wherein the target service window is used to display an interface of the second application; and
sending a control instruction to the second electronic device in response to an operation performed by the user on the target service window.

9. The method according to claim 8, wherein after the displaying second information in the first application based on the first information, the method further comprises:
automatically closing the target service window.

10. The method according to claim 8 or 9, wherein before the opening a target service window on the interface of the first application, the method further comprises:
displaying a third control on the interface of the first application; and
the opening a target service window on the interface of the first application comprises:
opening the target service window on the interface of the first application in response to an operation performed by the user on the third control.

11. The method according to claim 8, wherein before the opening a target service window on the interface of the first application, the method further comprises:
obtaining a distance between the first electronic device and the second electronic device; and
if the distance between the first electronic device and the second electronic device is greater than or equal to a first threshold, opening the target service window on the interface of the first application; or
if the distance between the first electronic device and the second electronic device is less than the first threshold, skipping opening the target service window on the interface of the first application.

12. The method according to any one of claims 8 to 11, wherein before the automatically receiving first information that is generated by the second application and that is sent by the second electronic device, the method further comprises:
after the second electronic device generates the first information, sending a storage instruction to the second electronic device, wherein the storage instruction indicates that a storage location of the first information comprises the first electronic device; and
receiving the first information sent by the second electronic device.

13. The method according to any one of claims 1 to 12, wherein after the automatically receiving first information that is generated by the second application and that is sent by the second electronic device, the method further comprises:
locally storing the first information based on a storage structure of the first electronic device.

14. The method according to any one of claims 1 to 13, wherein the target service is a camera service.

15. The method according to claim 14, wherein the first information is a color image, the first electronic device is an electronic ink screen reader, and the second information is a grayscale image corresponding to the color image.

16. The method according to claim 4, wherein the preset priority rule comprises that an electronic device that provides the target service and that has a same account as the first electronic device has a higher priority.

17. The method according to claim 4, wherein the preset priority rule comprises that an electronic device that provides the target service and that is in an active state has a higher priority.

18. The method according to claim 4, wherein the preset priority rule comprises that an electronic device that provides the target service and that has a stronger target service capability has a higher priority.

19. The method according to claim 4, wherein the preset priority rule comprises that an electronic device that provides the target service and that has a higher battery level and a better hardware device status has a higher priority.

20. A service invoking method, applied to a second electronic device, wherein the second electronic device comprises a second application, and the method comprises:
starting the second application based on an invoking request that is of a target service and that is sent by a first electronic device, wherein the second application provides the target service;
generating first information by using the second application; and
sending the first information to the first electronic device, wherein the first electronic device comprises a first application, and the first application is different from the second application, so that the first electronic device displays second information on an interface of the first application based on the first information, wherein the second information is the same as or different from the first information.

21. The method according to claim 20, wherein after the generating first information by using the second application, the method further comprises:
displaying a fourth control, wherein the fourth control is used to display a storage location option for storing the first information, and the storage location option comprises a first electronic device option; and
in response to an operation that a user selects the first electronic device option from the storage location option in the fourth control, instructing the first electronic device to store the first information.

22. A service invoking system, wherein the system comprises a first electronic device that performs the method according to any one of claims 1 to 19 and a second electronic device that performs the method according to claim 20 or 21.

23. An electronic device, comprising a processor and a memory, wherein the memory is configured to store a computer program, the computer program comprises program instructions, and when the processor runs the program instructions, the electronic device is enabled to perform the steps of the method according to any one of claims 1 to 21.

24. A computer-readable storage medium, wherein the computer-readable storage medium stores a computer program, the computer program comprises program instructions, and when the program requests to be run by a computer, the computer is enabled to perform the method according to any one of claims 1 to 21.
